# EUROPEAN PATENT SPECIFICATION

(11) **EP 1 236 836 B1**
(45) Date of publication and mention of the grant of the patent: **15.03.2006**
(21) Application number: 02396010.7
(22) Date of filing: 04.02.2002
(51) Int. Cl.: E04B 2/06, F16B 2/06, F16B 5/06, F24B 1/06, E04B 1/61, F16B 5/00

(54) **Corner joint structure**
Eckverbindungsanordnung
Structure de joint d'angle

(30) Priority: 15.02.2001 FI 20010288
(43) Date of publication of application: 04.09.2002
(73) Proprietor: Nunnanlahden Uuni Oy, 83940 Nunnanlahti (FI)
(72) Inventor: Lehikoinen, Juhani, c/o Nunnanlahden Uuni Oy, 83940 Nunnanlahti (FI)
(74) Representative: Simmelvuo, Markku Kalevi

(56) References cited:
- AU-A- 1 300 676
- FR-A- 2 253 455
- FR-A- 2 584 115
- GB-A- 2 173 626

## Description

The present invention relates to a corner joint structure as defined in the preamble of claim 1.

In soapstone fireplaces and similar stone structures, various corner joint structures for making an angular joint between stone elements used in them are known. Technical solutions of this type are disclosed e.g. in Finnish patents 87687, 87688, 87689, 88070 and 89304. These specifications describe various fillets for use on the corners of stone elements, as well as clasps, bolts or equivalent to be used in connection with them so that the stone elements can be firmly joined together and a neat corner is achieved.

A problem with prior-art structures is above all their complex construction and the difficulty of fixing them. For mounting, the elements to be joined together generally have to be provided with various grooves and borings, some of which can only be made on the site of installation. Therefore, the mounting work is relatively slow and difficult.

The object of the invention is to eliminate the above-mentioned drawbacks. A specific object of the invention is to disclose a new type of corner joint structure that will allow two stone elements to be joined together in a manner as simple and fast as possible without requiring any laborious tooling operations on the site of installation.

As for the features characteristic of the invention, reference is made to the claims.

The corner joint structure of the invention is designed for joining two stone elements together. Each stone element comprises edge faces and lateral faces, forming corners in the stone elements, and the stone elements are joined together by these corner areas. According to the invention, the corner joint structure comprises an outer yoke mounted against the edge surfaces of both stone elements and an inner yoke mounted against the lateral surfaces of both stone elements. In addition, the outer yoke is provided with transverse locking elements for locking the movement of the stone elements in the direction of their edge surfaces. Likewise, the corner joint structure comprises lengthwise locking elements for locking the movement of the stone elements in the direction of their lateral surfaces, and a fastening means for fastening the outer yoke and the inner yoke together.

In an embodiment of the invention, the lengthwise locking elements are incorporated in the outer yoke. In another embodiment of the invention, the lengthwise locking elements are incorporated in the inner yoke.

The fastening between the outer yoke and the inner yoke may be implemented using suitable fastening elements, a screw, bolt or equivalent fastening elements. It is also possible to implement the fastening as a fixed structure, i.e. by making a permanently fixed rigid connection between the outer yoke and the inner yoke, in which case the corner joint structure consists of a single unitary body.

In an embodiment of the invention, the transverse locking element is a flange that can be fitted into a slot in the edge surface of the stone element. Another possibility is to implement the transverse locking element as a flange that can be fitted against a surface opposite to the lateral surface.

In an embodiment of the invention, the lengthwise locking element is a flange that can be fitted in a slot provided either in the lateral surface or in a surface opposite to the lateral surface.

The lengthwise locking element and the transverse locking element are preferably at an angle, e.g. a right angle to each other in the same stone element.

In an embodiment of the invention, the stone element corners by whose areas they are connected together are held at a distance from each other by providing both the outer yoke and the inner yoke with suitable parallel connecting flanges. In this case, the outer yoke and the inner yoke can be fastened or locked to each other in the area of the connecting flanges.

In an embodiment of the invention, the outer yoke is provided with suitable supporting elements, to which it is possible to connect or attach a corner piece of e.g. the same stone material or a corner molding of a suitable profile to cover the corner area between the stone elements to be joined together. The outer yoke may also be provided with a cladding surface forming a fixed part the yoke and covering the corner area between the stone elements. The shape of the cladding surface can be chosen freely, so it may be of a relatively simple curved or straight and angular form, or the cladding surface may function as an ornamental element, which may even comprise complex surface shapes, projections and recesses.

Regardless of whether it consists of separate outer yoke and inner yoke or a unitary solid body, the corner joint structure of the invention may consist of long strips extending through the entire length of the corner. Also, the structure may just as well consist of short joining pieces, which are mounted in the corner area at suitable distances, e.g. at the upper and lower edges of each element to be joined. It is further possible that only one of the outer yoke and inner yoke is of an elongated form extending through the entire corner joint area while the other one only forms a short counterpart placed at suitable distances along the joint.

When the outer yoke or the inner yoke are strips extending through the whole length of the corner, a suitable sealing material may be used between the strip and the two stone elements. Thus, combustion gases can flow inside the structure without escaping through the corner area.

As compared with prior art, the corner joint structure of the invention has significant advantages. The corner joint structure of the invention is very simple to implement with only one or two different profiled elements. The lengths of the profiled elements may vary depending on the case, and they may even consist of short brackets that are mounted at suitable distances from each other. The corner joint structure does not require any separate complicated tooling or boring operations on the stone elements to be joined together; instead, it suffices to provide the stone elements with straight slots by sawing them in appropriate places.

In the following, the invention will be described in detail with reference to the attached drawings, wherein
Fig. 1 presents a sectional view of a first embodiment of the invention,
Fig. 2 presents a sectional view of a second embodiment of the invention,
Fig. 3 presents a sectional view of a third embodiment of the invention,
Fig. 4 presents a sectional view of a fourth embodiment of the invention,
Fig. 5 presents a sectional view of a fifth embodiment of the invention,
Fig. 6 presents a sectional view of a sixth embodiment of the invention,
Fig. 7 presents a sectional view of a seventh embodiment of the invention,
Fig. 8 presents a sectional view of an eighth embodiment of the invention,
Fig. 9 presents a sectional view of a ninth embodiment of the invention.

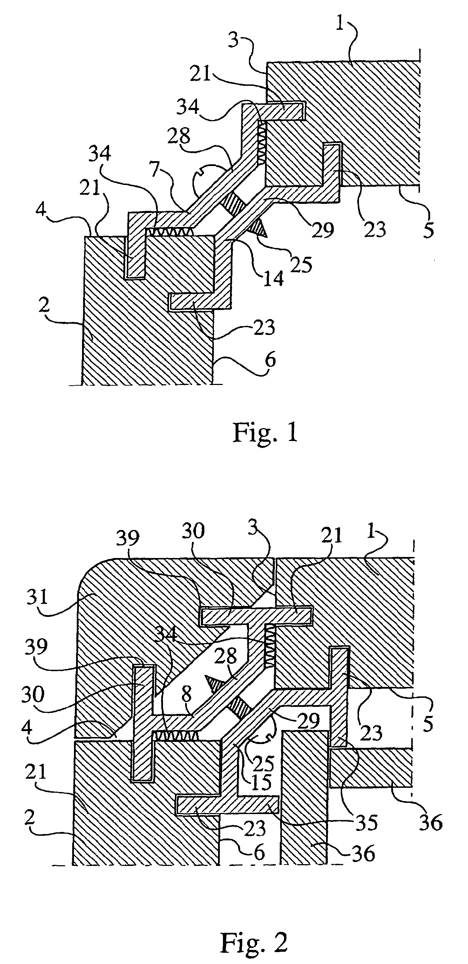

In the embodiment presented in Fig. 1, the stone elements 1 and 2 comprise edge surfaces 3 and 4 and lateral surfaces 5 and 6. In this embodiment, the outer yoke 7 and the inner yoke 14 used to join the stone elements together are identical. Thus, the outer yoke 7 comprises portions that are placed against the edge surfaces 3 and 4 of the stone elements, and these portions are connected by a connecting flange 28. In addition, the outer yoke has flange-like transverse locking elements 21 inserted into perpendicular slots machined in the edge surfaces 3 and 4.

In a corresponding manner, the inner yoke 14 comprises portions parallel to the lateral surfaces 5 and 6, a connecting flange 29 connecting them and flange-like lengthwise locking elements 23 fitted in perpendicular slots machined in the lateral surfaces 5 and 6. The connecting flanges 28 and 29 are parallel and relatively close to each other. Thus, they can be locked together and tightened towards each other e.g. from the side of the outer corner by means of a fastening element 25, i.e. a screw or equivalent, so that the stone elements 1 and 2 are locked to each other.

In the embodiment in Fig. 1, the outer yoke 7 is a strip extending through the entire length of the joint, and the inner yoke 14 may consist of only brackets placed at suitable distances from each other and fastened to the outer yoke. The joint between the outer yoke 7 and the edge surfaces 3 and 4 is provided with a seal 34, the corner joint being thus sealed throughout its length.

In the embodiment in Fig. 2, the stone elements 1 and 2 are joined together in a manner corresponding to Fig. 1 by means of an outer yoke 8 and an inner yoke 15. However, in difference to Fig. 1, the yokes are fastened together with a screw 25 from the side of the inner corner. In this embodiment, the outer yoke 8 additionally comprises supporting elements 30 formed as outward extensions of the flange-like transverse locking elements 21, i.e. flanges to which it is possible to fix a stone element covering the corner area, i.e. a corner piece 31, by slots 39 made in the corner piece. Correspondingly, the inner yoke 15 has flange-like supporting elements 35 extending inwards from the flange-like lengthwise locking elements 23 and forming supporting surfaces for an interior second stone layer 36. The interior stone layer 36 can be attached to the supporting elements 35 at a given distance from the stone elements 1 and 2 so that an air gap of desired size is formed between the stone elements 1, 2 and the interior stone layer. This air gap, either as such or provided with suitable elements, can serve as an effective heat balancing or heat transfer jacket.

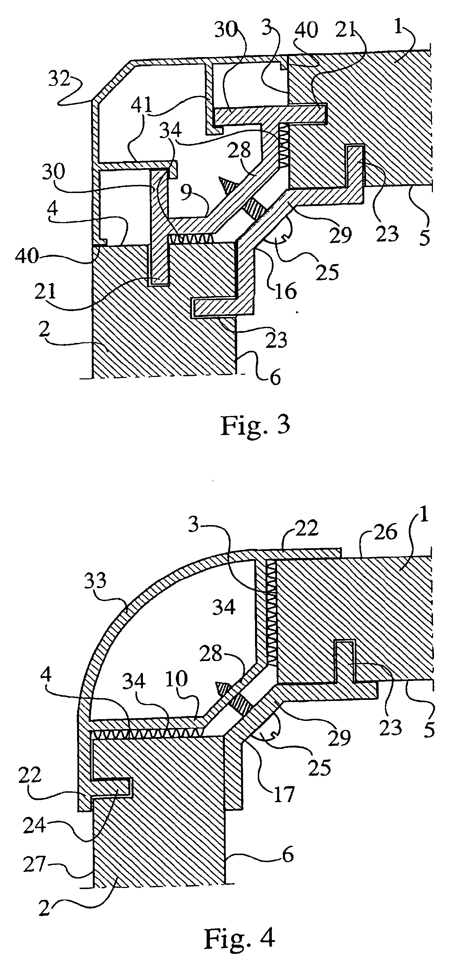

Fig. 3 presents an embodiment of the invention with an inner yoke 16 of a structure and shape corresponding to the inner yoke 14 in Fig. 1 and an outer yoke 9 of a structure and shape corresponding to the outer yoke 8 in Fig. 2. In this structure, the difference to the corner structure in Fig. 2 is that it comprises a corner molding 32 of a given profile attached to the supporting elements 30. The corner molding 32 has joint surfaces 40 by which it is attached to the edge surfaces 2 and 4 of the stone elements 1 and 2. In addition, the profile of the corner molding 32 comprises fixing hooks 41 allowing the corner molding to be locked fast to the outward extending flange-like supporting elements 30 of the outer yoke 9.

Fig. 4 illustrates two different embodiments of the invention. First, a feature common to these embodiments is that the outer yoke 10 comprises a cladding surface 33 of a curved shape, forming an essential and fixed part of the yoke and covering the corner area between the stone elements 1 and 2. The cladding surface 33 continues along the surface 26 opposite to the lateral surface 5 of stone element 1, forming a transverse locking element 22, and along the surface 27 opposite to the lateral surface 6 of stone element 2, likewise forming a transverse locking element 22.

As for the lengthwise locking element, this figure presents two embodiments. The lengthwise locking element 23 may consist of a flange fitted in a slot perpendicular to the lateral surface 5 of stone element 1, or it may be a flange fitted in a slot in the surface 27 opposite to the lateral surface 6 of stone element 2 and fixed to the transverse locking element 22. Thus, it can be seen from Fig. 4 that the essential feature in the various embodiments of the structure is that the two stone elements are locked to each other so as to be immovable both in the lengthwise direction and in the transverse direction.

Figures 1 - 4 illustrate embodiments of the invention in which the stone elements 1 and 2 are joined together at a distance from each other, in other words, both the outer yoke and the inner yoke comprise connecting flanges 28 and 29, by which the outer yoke and inner yoke can be fastened and tightened together.

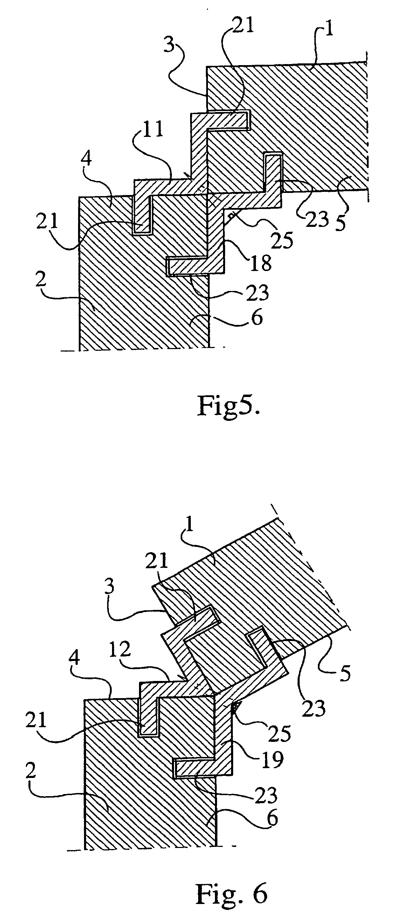

Fig. 5 presents an embodiment having no connecting flanges. Thus, the outer yoke 11 comprises only portions to be placed against the edge surfaces 3 and 4 of the stone elements 1 and 2, and transverse locking elements 21 extending into slots perpendicular to these surfaces. In a corresponding manner, the inner yoke 18 comprises portions placed against the perpendicular lateral surfaces 5 and 6, and lengthwise locking elements 23 fitted in slots perpendicular to the lateral surfaces. The outer yoke 11 and the inner yoke 18 can then be fastened to each other with a screw or bolt 25, the stone elements 1 and 2 being thus fixed and locked in the desired manner.

In the embodiment in Fig. 5, the stone elements 1 and 2 are at an angle of 90° to each other and likewise the different parts and flanges of the outer yoke 11 and the inner yoke 18 are perpendicular to each other. Thus, the outer yoke and the inner yoke have identical profiles. By contrast, Fig. 6 presents an embodiment in which the stone elements 1 and 2 are joined together at an angle of 135°. In this case, the portions of the outer yoke 12 that are placed against the edge surfaces 3 and 4 of the stone elements 1 and 2 are at an angle of 45° to each other, and the portions of the inner yoke 19 that are placed against the lateral surfaces 5 and 6 of the stone elements 1 and 2 are at an angle of 135° to each other. In other respects, the structure and function correspond to the embodiment presented in Fig. 5. By varying the angles of the outer yoke and inner yoke in a corresponding manner, stone elements can be effectively joined together at any angle.

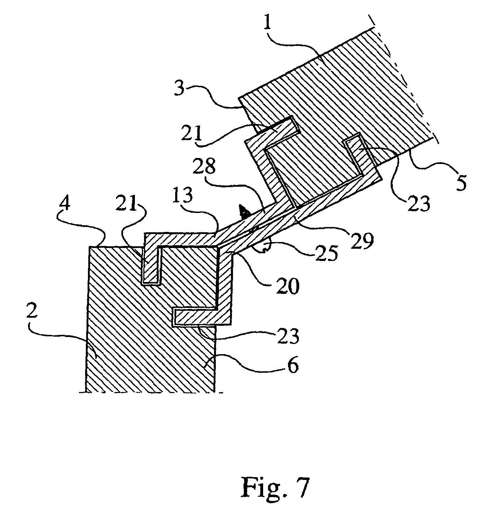

Fig. 7 presents an embodiment as shown in Fig. 6, i.e. with the stone elements 1 and 2 joined together at an angle of 135°, but at a distance from each other by using connecting flanges 28 and 29. The outer yoke 13 and the inner yoke 20 are fixed together by means of a fastening element 25, i.e. a screw. In other respects, the structure corresponds to the embodiment presented in Fig. 6.

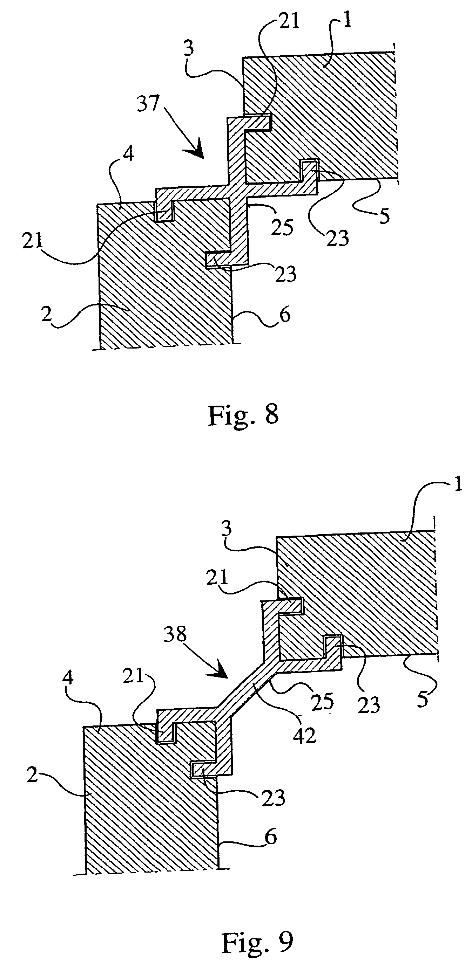

In the embodiment in Fig. 8, the stone elements 1 and 2 are fastened together by means of a unitary profiled element 37 that comprises both an outer yoke and an inner yoke as solid parts of it. In this case, the same unitary profiled element is set against both the edge surfaces 3 and 4 and the lateral surfaces 5 and 6. The profiled element also comprises transverse locking elements 21 extending into slots perpendicular to the edge surfaces 3 and 4 as well as lengthwise locking elements 23 extending into slots perpendicular to the lateral surfaces 5 and 6. Thus, by means of one and the same fastening element, without any tightening or coupling, two stone elements 1 and 2 can be joined cornerwise together. This embodiment is very useful at least when short profiled elements or brackets are used, by means of which the stone elements are joined together only by their ends, or by their upper and lower ends.

Fig. 9 presents a unitary profiled element 38 corresponding to Fig. 8, only differing from the profiled element in Fig. 8 in that it comprises a connecting flange 42, so the stone elements 1 and 2 are joined together at a somewhat larger distance from each other than in the embodiment presented in Fig. 8. By choosing an appropriate connecting flange width, the stone elements can be joined together at a desired distance from each other. In other respects, the structure and function of this embodiment correspond to that in Fig. 8.

In the embodiments presented in Fig. 2 and 3, the outer yoke comprises supporting elements 30, i.e. flanges that can be optionally used in all the embodiments presented in Fig. 5 - 9, too, if the outer yoke is to serve as a mounting for the attachment of profiled elements or corner pieces partly or completely covering the corner area. In the same way, if necessary, flange-like supporting elements 35 like those comprised in the inner yoke in Fig. 2 may be used in all the embodiments described above.

In all the embodiments presented in the drawings in which the inner yoke and outer yoke are separate bodies, the inner yoke and the outer yoke may be fastened and/or tightened together in any appropriate manner, using screws, bolts, rivets, ties or hooks, or they may even be welded together. Likewise, the fastening direction, i.e. e.g. the direction from which the screw is driven in can be freely chosen considering the space available. Thus, e.g. in a hind corner of a fireplace built beside a wall it will be easier to drive in the screw from the inside of the fireplace, i.e. e.g. as in Fig. 3, whereas in a front corner the screw will be easier to drive in from outside the fireplace, i.e. from the direction of the outer corner, as illustrated e.g. in Fig. 1.

In the foregoing, the invention has been described by way of example with reference to the attached drawings while different embodiments of the invention are possible within the inventive idea defined in the claims.

## Claims

1. Corner joint structure for joining two stone elements (1, 2) together, said stone elements comprising edge surfaces (3, 4) and lateral surfaces (5, 6) forming corners in the stone elements, which are joined together at these corner areas, **characterized in that** the corner joint structure comprises
- an outer yoke (7 - 13) mounted against the edge surfaces (3, 4) of both stone elements,
- an inner yoke (14 - 20) mounted against the lateral surfaces (5, 6) of both stone elements,
- transverse locking elements (21, 22) in the outer yoke for locking the movement of the stone elements (1, 2) in the direction of their edge surfaces (3, 4),
- lengthwise locking elements (23, 24) for locking the movement of the stone elements in the direction of their lateral surfaces, and
- a fastening means (25) for fastening the outer yoke and the inner yoke to each other.

2. Corner joint structure as defined in claim 1, **characterized in that** the lengthwise locking elements (24) are incorporated in the outer yoke (10).

3. Corner joint structure as defined in claim 1, **characterized in that** the lengthwise locking elements (23) are incorporated in the inner yoke (14 - 20) .

4. Corner joint structure as defined in claim 1, **characterized in that** the transverse locking element (21) is a flange that can be fitted into a slot in the edge surface (3, 4).

5. Corner joint structure as defined in claim 1, **characterized in that** the transverse locking element (22) is a flange that can be fitted against a surface (26 - 27) opposite to the lateral surface (5, 6) .

6. Corner joint structure as defined in any one of claims 1 - 5, **characterized in that** the lengthwise locking element (23 - 24) is a flange that can be fitted in a slot provided in the lateral surface (5, 6) or in a surface (26, 27) opposite to the lateral surface.

7. Corner joint structure as defined in any one of claims 1 - 6, **characterized in that** the lengthwise locking element (23, 24) and the transverse locking element (21, 22) are at an angle to each other in the same stone element (1, 2).

8. Corner joint structure as defined in claim 1, **characterized in that** both the outer yoke (7 - 10, 13) and the inner yoke (14 - 17, 20) comprise parallel connecting flanges (28, 29), by which they can be locked together by means of a fastening element (25) .

9. Corner joint structure as defined in claim 1, **characterized in that** the outer yoke (8, 9) comprises supporting elements (30) that can be used as a mounting for the attachment of a corner piece (31) or corner molding (32) covering the corner between the stone elements.

10. Corner joint structure as defined in claim 1, **characterized in that** the outer yoke (10) comprises a cladding surface (33) forming a fixed part the yoke and covering the corner between the stone elements.

11. Corner joint structure as defined in any one of claims 1 - 10, **characterized in that** the outer yoke and/or the inner yoke are strips extending throughout the length of the corner.

12. Corner joint structure as defined in claim 11, **characterized in that** the structure comprises seals (34) placed between said strip and the two stone elements.

13. Corner joint structure as defined in claim 1, **characterized in that** the inner yoke (15) comprises supporting elements (35) for the attachment of a second stone layer (36) at a given distance from the stone elements (1, 2).

14. Corner joint structure as defined in claim 1, **characterized in that** the outer yoke and the inner yoke constitute a single unitary profiled element (37, 38) .

## Revendications

1. Structure de joint d'angle pour relier ensemble deux éléments (1,2) en pierre, lesdits éléments en pierre comprenant des surfaces de rive (3,4) et des surfaces latérales (5,6) formant des angles dans les éléments en pierre, lesquels sont joints entre eux dans ces zones d'angle, **caractérisé en ce que** la structure de joint d'angle comprend :
- un attelage extérieur (7-13) monté contre les surfaces de rive (3,4) sur les deux éléments en pierre ;
- un attelage intérieur (14-20) monté contre les surfaces latérales (5,6) des deux éléments en pierre ;
- des éléments de verrouillage transversaux (21,22) dans l'attelage extérieur pour verrouiller le mouvement des éléments en pierre (1,2) selon la direction de leurs surfaces de rive ;
- des éléments de verrouillage longitudinaux (23,24) pour verrouiller le mouvement des éléments en pierre (1,2) selon la direction de leurs surfaces latérales ; et,
- des moyens d'attache (25) pour attacher l'attelage extérieur et l'attelage intérieur l'un à l'autre.

2. Structure de joint d'angle telle que définie dans la revendication 1, **caractérisée en ce que** les éléments de verrouillage longitudinaux (24) sont incorporés dans l'attelage extérieur (10).

3. Structure de joint d'angle telle que définie dans la revendication 1, **caractérisée en ce que** les éléments de verrouillage longitudinaux (23) sont incorporés dans l'attelage intérieur (14-20).

4. Structure de joint d'angle telle que définie dans la revendication 1, **caractérisée en ce que** l'élément de verrouillage transversal (21) est une semelle qui peut être ajustée dans une fente de la surface de rive (3,4).

5. Structure de joint d'angle telle que définie dans la revendication 1, **caractérisée en ce que** l'élément de verrouillage transversal (22) est une semelle qui peut être ajustée sur une surface (26-27) opposée à la surface latérale (5,6).

6. Structure de joint d'angle telle que définie dans l'une quelconque des revendications 1 à 5, **caractérisée en ce que** l'élément de verrouillage longitudinal (23-24) est une semelle qui peut être ajustée dans une fente fournie dans la surface latérale (5,6) ou dans une surface (26,27) opposée à la surface latérale.

7. Structure de joint d'angle telle que définie dans l'une quelconque des revendications 1 à 6, **caractérisée en ce que** l'élément de verrouillage longitudinal (23-24) et l'élément de verrouillage transversal (21,22) forment un angle l'un par rapport à l'autre dans le même élément en pierre (1,2).

8. Structure de joint d'angle telle que définie dans la revendication 1, **caractérisée en ce qu'**à la fois l'attelage extérieur (1-10,13) et l'attelage intérieur (14-17,20) comprennent des semelles de verrouillage parallèles (28,29), par lesquelles il peuvent être verrouillés ensembles au moyen d'un élément d'attache (25).

9. Structure de joint d'angle telle que définie dans la revendication 1, **caractérisée en ce que** l'attelage extérieur (8,9) comprend des éléments de support (30) qui peuvent être utilisés comme montage pour l'attachement d'une pièce d'angle (31) ou d'une moulure d'angle (32) couvrant l'angle entre les éléments en pierre.

10. Structure de joint d'angle telle que définie dans la revendication 1, **caractérisée en ce que** l'attelage extérieur (10) comprend une surface d'habillage (33) formant une partie fixe de l'attelage et couvrant l'angle entre les éléments en pierre.

11. Structure de joint d'angle telle que définie dans l'une quelconque des revendications 1 à 10, **caractérisée en ce que** l'attelage extérieur et/ou l'attelage intérieur sont des bandes s'étendant tout au long de l'angle.

12. Structure de joint d'angle telle que définie dans la revendication 11, **caractérisée en ce que** la structure comprend des joints d'étanchéité (34) disposés entre ladite bande et les deux éléments en pierre.

13. Structure de joint d'angle telle que définie dans la revendication 1, **caractérisée en ce que** l'attelage intérieur (15) comprend des éléments de support (35) pour l'attachement d'une deuxième couche (36) de pierres à une distance donnée des éléments en pierre (1,2).

14. Structure de joint d'angle telle que définie dans la revendication 1, **caractérisée en ce que** l'attelage extérieur et l'attelage intérieure constituent un seul élément profilé unitaire (37,38).

## Patentansprüche

1. Eckverbindungsanordnung zum Verbinden von zwei Steinelementen (1, 2) miteinander, welche Steinelemente Kantenflächen (3, 4) und Seitenflächen (5, 6) aufweisen, die Ecken in den Steinelementen bilden, die an diesen Eckenbereichen miteinander verbunden sind, **dadurch gekennzeichnet, dass** die Eckverbindungsanordnung aufweist:
- ein äußeres Joch (7, 13), das an den Kantenflächen (3, 4) beider Steinelemente befestigt ist,
- ein inneres Joch (14, 20), das an den Seitenflächen (5, 6) beider Steinelemente befestigt ist,
- Querverriegelungselemente (21, 22) an dem äußeren Joch zum Verriegeln der Bewegung der Steinelemente (1, 2) in der Richtung ihrer Kantenflächen (3, 4),
- Längsverriegelungselemente (23, 24) zum Verriegeln der Bewegung der Steinelemente in der Richtung ihrer Seitenflächen, und
- ein Befestigungsmittel (25) zum Befestigen des äußeren Jochs und des inneren Jochs miteinander.

2. Eckverbindungsanordnung nach Anspruch 1, **dadurch gekennzeichnet, dass** die Längsverriegelungselemente (24) in das äußere Joch (10) integriert sind.

3. Eckverbindungsanordnung nach Anspruch 1, **dadurch gekennzeichnet, dass** die Längsverriegelungselemente (23) in das innere Joch (14 - 20) integriert sind.

4. Eckverbindungsanordnung nach Anspruch 1, **dadurch gekennzeichnet, dass** das Querverriegelungselement (21) ein Flansch ist, der in einen Schlitz in der Kantenfläche (3, 4) eingepasst werden kann.

5. Eckverbindungsanordnung nach Anspruch 1, **dadurch gekennzeichnet, dass** das Querverriegelungselement (22) ein Flansch ist, der an einer Oberfläche (26 - 27) gegenüber der Seitenfläche (5, 6) anliegen kann.

6. Eckverbindungsanordnung nach einem der Ansprüche 1 - 5, **dadurch gekennzeichnet, dass** das Längsverriegelungselement (23, 24) ein Flansch ist, der in einen in der Seitenfläche (5, 6) oder in einer Oberfläche (26, 27) gegenüber der Seitenfläche vorgesehenen Schlitz eingepasst werden kann.

7. Eckverbindungsanordnung nach einem der Ansprüche 1 - 6, **dadurch gekennzeichnet, dass** das Längsverriegelungselement (23, 24) und das Querverriegelungselement (21, 22) unter einem Winkel zueinander in demselben Steinelement (1, 2) angeordnet sind.

8. Eckverbindungsanordnung nach Anspruch 1, **dadurch gekennzeichnet, dass** sowohl das äußere Joch (7 - 10, 13) als auch das innere Joch (14 - 17, 20) parallele Verbindungsflansche (28, 29) aufweisen, durch die sie mittels eines Befestigungselements (25) gegeneinander verriegelt werden können.

9. Eckverbindungsanordnung nach Anspruch 1, **dadurch gekennzeichnet, dass** das äußere Joch (8, 9) Stützelemente (30) aufweist, die als ein Rahmen für die Befestigung eines Eckstücks (31) oder eines Eckformstücks (32) verwendet werden können, das die Ecke zwischen den Steinelementen abdeckt.

10. Eckverbindungsanordnung nach Anspruch 1, **dadurch gekennzeichnet, dass** das äußere Joch (10) eine Mantelfläche (33) aufweist, die einen festen Teil des Jochs bildet und die Ecke zwischen den Steinelementen abdeckt.

11. Eckverbindungsanordnung nach einem der Ansprüche 1 - 10, **dadurch gekennzeichnet, dass** das äußere Joch und/oder das innere Joch Streifen sind, die sich über die Länge der Ecke erstrecken.

12. Eckverbindungsanordnung nach Anspruch 11, **dadurch gekennzeichnet, dass** die Anordnung Dichtungen (34) aufweist, die zwischen dem Streifen und den beiden Steinelementen angeordnet sind.

13. Eckverbindungsanordnung nach Anspruch 1, **dadurch gekennzeichnet, dass** das innere Joch (15) Tragelemente (35) für die Befestigung einer zweiten Steinschicht (36) in einem gegebenen Abstand von den Steinelementen (1, 2) aufweist.

14. Eckverbindungsanordnung nach Anspruch 1, **dadurch gekennzeichnet, dass** das äußere Joch und das innere Joch ein einzelnes unitäres Profilelement (37, 38) bilden.
